# EUROPEAN PATENT APPLICATION

(11) **EP 3 211 033 A1**
(43) Date of publication of application: **30.08.2017**
(21) Application number: 15852756.4
(22) Date of filing: 19.10.2015
(51) Int. Cl.: C08L 27/22, B32B 27/00, B32B 27/18, C08F 259/08, C08L 101/00, C08L 101/02, H01B 1/06, C08L 51/00, H01G 11/56, H01M 10/0565

(54) **ELECTRICALLY CONDUCTIVE MATERIAL AND LAMINATE**

(30) Priority: 22.10.2014 JP 2014228420
(71) Applicant: PIOTREK CO., LTD., Nagara 2-chome Otsu Shiga 520-0046 (JP)
(72) Inventor: OGATA, Naoya, deceased (JP); SADA, Tsutomu, Kyoto 604-0022 (JP)
(74) Representative: Zumstein, Angela
(86) International application number: PCT/JP2015/080046
(87) International publication number: WO 2016/063994

(57) **Abstract**

Problems to be solved by this invention

This invention proposes a conductive material and multilayered structure having an excellent conductivity, an excellent durable conductivity and also strength.

Further, this invention proposes a multilayered structure having an excellent conductivity, an excellent durable conductivity and also strength comprising laminating the conductive material to one side surface or both surfaces of the non-conductive material layer.

The above purpose is accomplished by providing a conductive material comprising a polymer electrolyte composition (X¹) obtained by graft polymerizing 2 to 90 mol.% of a molten salt monomer having a polymerizable functional group and having an onium cation and anion containing a fluorine with a fluorine containing polymer and a fluoropolymer (X²) wherein X¹ contains 0.1 to 95A wt.% to X².

## Description

### FIELD OF THE INVENTION

This invention relates to a conductive material and multilayered structure having a excellent conductivity and strength.

### BACKGROUND ART

Various composite polymer electrolyte compositions having an excellent conductive property have been known. For example, PCT-WO2004/88671 (Patent reference 1) and PCT-WO2010/113971 (Patent reference 2) propose a composite polymer electrolyte composition prepared by polymerizing like grafting the electrochemically inert polymeric reinforcing material such as polyvinylidene fluoride with the molten salt polymer having a quaternary ammonium salt structure comprising quaternary ammonium cation group and anion group containing halogen atom, and also containing a charge transfer ion source.

However these references 1 and 2 do not disclose adding further fluoropolymer to the composite polymer electrolyte composition. Also, reference 2 disclose adding plastic resin to the electrolyte composition, but it does not disclose adding a fluoropolymer to the composition. Further Japanese patent 4126602 (Patent reference 3) discloses a laminated structure having non-conductive polymer to the both sides of the multilayered structure and having an ionic liquid containing a quaternary ammonium salt structure comprising quaternary ammonium cation group and anion group containing halogen atom to the intermediate layer of the structure, but it does not disclose using an ionic liquid having a polymerizable functional group. Further structure having a durable excellent conductivity and sticking strength of the layers of the structure are not obtained by using an ionic liquid not having a polymerizable functional group. These facts make clear in comparative example 3 described later.

### Prior arts

### Patent reference

Patent reference 1 : International publication WO2004/088671 (Claims)
Patent reference 2 : International publication WO2010/11397 (Claims 0040)
Patent reference 3 : Japanese patent 4126602 (Claims 0024 0026)

### SUMMARY OF THE INVENTION

### Problems to be solved by the invention:

This invention proposes a conductive material and multilayered structure having an excellent conductivity, an excellent durable conductivity and also strength.

### Means to solve the problems:

The purpose is to attribute to a conductive material comprising a polymer electrolyte composition(X¹) obtained by graft polymerizing 2 to 90 mole % of a molten salt monomer having a polymerizable functional group and having an onium cation and anion containing a fluorine with a fluorine containing polymer and a fluoropolymer(X²) wherein X¹ contains 0.1 to 95 wt % to X²

The purpose is to attribute better a conductive material in accordance with the above invention, wherein further at least one member selected from the group consisting of a molten salt having an onium cation and anion containing a fluorine, a molten salt monomer having a polymerizable functional group and having an onium cation and anion containing a fluorine and polymer or copolymer of the above mentioned molten salt monomer having is added 0.1 to 95 wt % to X¹ and X².

The purpose is to attribute better a conductive material in accordance with the above invention, wherein further at least one member selected from the group consisting of Y as stated later is added 0.1 to 95 wt.% to the total amount of X¹ and X²;
Y: polyolefin resin, polyacrylic resin, polyhalogen resin, vinyl acetate resin, polyether, diene resin, polyester resin, polyamide resin, polysulfone resin, polyphenylene sulfite resin, polyimide resin, silicon resin, polyurethane resin, epoxy resin, phenol resin, amino resin, natural resin.

The purpose is to attribute better a conductive material according to the above invention, wherein a molten salt monomer is graft-polymerized with a fluorine containing polymer under an atom transfer radical polymerization.

The purpose is to attribute better a conductive material according to the present invention, wherein a molten salt monomer is a salt having at least one ammonium quaternary cation selected from the group consisting of
(A) trialkylaminoethylmethacrylate ammonium cation,
   trialkylaminoethylacrylate ammonium cation,
   trialkylaminopropyla c rylamido ammonium cation,
   2-(methacryloyloxy)dialkyl ammonium cation
   1-alkyl-3-vinylimidazolium cation,
   4-vinyl-1-alkylpyridinium cation,
   1-(4-vinylbenzyl)-3-alkyl imidazolium cation,
   1-(vinyloxyethyl)-3-alkylimidazolium cation,
   1-vinyl imidazolium cation, 1-allylimidazolium cation,
   N-alkyl-N-allylammonium cation,
   1-vinyl-3-alkylimidazolium cation,
   1-glycidyl-3-alkyl-imidazolium cation,
   N-allyl-N-alkylpyrrolidinium cation, onium cation,
   and quaternary diallyl dialkyl ammonium cation and
   at least one anion selected from the group consisting of
(B) bis {(trifluoromethane)sulfonylimide}anion,
   2,2,2-trifluoro-N-{(trifluoromethane)sulfonyl}acetimide anion,
   bis{(pentafluoro)sulfonyl}imide anion,
   bis(fluorosulfonyl}imide anion, tetra fluoroborate anion, hexafluorophosphate anion,
   trifluoromethanesulfonylimide anion,
   perfluoroalkanesulphonete anion,
   bis(perfluoroalkanesulfonyl) imide anion,
   tris(perfluoroalkanesulfonyl) methide acid anion

The purpose is to attribute better a conductive material in accordance with the above invention, wherein a fluorine containing polymer is a poly vinylidene fluoride having a unit of a vinylidene fluoride and a unit of -(CR¹R²-CFX)-;
X means halogen atom except fluorine atom,
R¹ and R² means hydrogen atom or fluorine atom, each is same or different,

The purpose is to attribute better a conductive material according to the above invention, wherein the conductive material contains a charge transfer ion source, for example a lithium salt selected from the group consisting of LiBF₄, LiPF₆, CₙF₂ₙ₊₁CO₂Li wherein n=1 to 4 is an integer whole number, CₙF₂ₙ₊ᵢSO₃Li wherein n=1 to 4 is an integer whole number, (FSO₂)₂NLi, (CF₃SO₂)₂NLi, (C₂F₅SO₂)₂NLi, (CF₃SO₂)₃NLi, Li(CF₃SO₂-N-COCF₃), Li(R-SO₂-N-SO₂CF₃) wherein R is aliphatic group or aromatic group, (CN-N)₂CₙF₂ₙ₊₁Li wherein n=1 to 4 is an integer, whole number.

The purpose is to attribute better a conductive material in accordance with the above invention, wherein the conductive material contains a tetra alkylene glycol dialkyl ether (TAGDAE).

The purpose is to attribute better a conductive pressure sensitive adhesive, conductive adhesive, conductive paint, conductive powder for shaped article, conductive resin pellet for injection molding, conductive thread, conductive sheet, conductive plate, conductive tube or pipe made of the conductive material as defined in the above invention.

The purpose is to attribute better a conductive material in accordance with the above invention, wherein the conductive material contains at least one members selected from the group consisting of filler, dispersant, ant-oxidizing agent, slipping agent, anti-blocking agent, violet ray absorbing agent, dye and pigment

The purpose is to attribute better a multilayered conductive structure comprising to a layer of the non-conductive polymer (W) as mentioned below and a surface layer or an intermediate layer of pressure sensitive adhesive or paint made of the conductive material as defined in the above invention;
W: polyolefin resin, polyacryl resin, polyhalogen resin, vinyl acetate resin, polyether, diene resin, polyester resin, polyamide resin, polysulfone resin, polyphenylene sulfite resin, polyimide resin, silicon resin having detachment film, polyurethane resin, epoxy resin, phenol resin, amino resin, natural resin.

The purpose is to attribute better a multilayered conductive structure according to the above invention, wherein W is polyolefin resin, polyacryl resin, vinyl acetate resin, or polyester resin.

### ADVANTAGE OF THE INVENTION

In this invention, a conductive material having an excellent conductivity, an excellent durable conductivity and strength is obtained. A multilayered structure having a layer of the conductive material to one surface layer or both surface layers of non-conductive material layer, or having a layer of the conductive material to the intermediate layer between non-conductive material layers has an excellent conductivity in the layer of the non-conductive material and also it has an excellent durable conductivity. Further the adhesive strength between the conductive material and the non-conductive material is excellent, and especially the durable conductivity is stable for long time, the conductivity is kept almost semi-permanent in case of no loads by chemical treatment or physically force. Further the transparency of the conductive material is improved by highly refining, the transparency is almost the same as of a polyacrylic resin having excellent transparency. Accordingly, by coating the conductive material of this invention to the base material, the color phase or transparency is not damaged.
Further by containing a charge transfer ion sources, or by containing the charge transfer ion sources and tetra alkylene glycol dialkyl ether(TAGDAE), the conductivity is improved better.

### PREFERRED EMBODIMENT OF THE INVENTION

This invention is extremely important to utilize a polymer electrolyte composition(X¹) obtained by graft polymerizing a molten salt monomer with a fluorine containing polymer and a fluoropolymer(X²), and by this combination the above-mentioned advantages are obtained.

First, polymer electrolyte composition(X¹) is mentioned below.

As a fluorine containing polymer used by graft polymerization, a polyvinylidene fluoride polymer or copolymer are preferably raised.

As the polyvinylidene fluoride copolymer, a copolymer having a unit of vinylidene and a unit specifying Formula:

- (CR¹R² - CFX)-

-In formula, X is of halogen atom except fluorine atom.
R¹ and R² are hydrogen atom or fluorine atom, each is same or different atom,
halogen atom is chlorine atom as the best, bromine atom or iodine atom also.

This co-polymer having Formula:

- (CR³R⁴-CR⁵F)ₙ-(CR¹R²-CFX)ₘ-

In formula, X is of halogen atom except fluorine atom.
R¹, R², R³, R⁴ and R5 are hydrogen atom or fluorine atom, each is same or different atom "n" is 65 to 99 mol %, "m" is 1 to 35 mol %.
is preferred and the best co-polymer is

Formula: -(CH₂-CF₂)ₙ-(CH₂-CFCl)ₘ-

In formula, "n" is 99 to 65 mol%, "m" is 35 to 1 mol%.

In case that "n" plus "m" is of 100 mol %, it is preferred to formulate "n" in 65 to 99 mol % and "m" in 1 to 35 mol %. The better formula is "n" in 67 to 97 mol % and "m" in 3 to 33 mol %. The best formula is "n" in 70 to 90 mol % and "m" in 10 to 30 mol %.

The said co-polymer is of block polymer or random co-polymer. And other monomers obtaining co-polymer are also utilized in a range of conforming to the purpose of this invention.

The molecular weight of the said polymer is 30,000 to 2,000,000. better as a mean molecular by weight. And the more preferred molecular by weight is 100,000 to 1,500,000. The mean molecular by weight is calculated based on the intrinsic viscosity[η] in an estimated formula.

In case of proceeding a grafting polymerization of molten salt monomer with the said co-polymer, it is adaptable an atom transfer radical polymerization with transition metal complexes. This transition metal positioning on the complex become a trigger by pulling out halogen atom such as chlorine atom except fluorine atom, and the molten salt monomer on the said polymer is graft-polymerized with the said co-polymer. Further a homo polymer of vinylidene fluoride is used.

In the atom transfer radical polymerization utilized in this invention, the co-polymer of polyvinylidene fluoride monomer composition and vinyl monomer containing fluoride and halogen atoms such as chlorine except fluorine is utilized better. The grafting polymerization of molten salt monomer is started by occurring easily pulling out halogen atom such as chlorine atom except fluorine atom faster than fluorine atom by a transition metal which is to weaken a connection energy between carbon and halogen with presence of fluorine and halogen atoms such as chlorine except fluorine in a part of trunk polymer.

Catalysts in the atom transfer radical polymerization are utilized a transition metal halogen materials as proposed particularly Copper Chloride(I) (CuCl), acetylacetonate copper(II) and Copper Bromide(CuBr)(I) and Copper Iodide(CuI)(I) and its same group. Ligand being formed the complex introduces 4,4'-dialkyl-2,2'-bipyridyl(bpy) (alkyl having C₁ to C₈ carbons such as methyl, ethyl, propyl, butyl are preferably raised), Tris(dimethyl aminoethyl)amine(Me₆-TREN),
N,N,N",N"-Pentamethyl diethylenetriamine(PMDETA),
N,N,N',N'-Tetrakis(2-pyridylmethyl)ethylenediamine(TPEN),
tris (2-pyridylmethyl) amine(TPMA)and its same group.

In this material list, it is more better utilized the transfer metal halogen complex formulating Copper Chloride(I) (CuCl) and 4,4'-dimethyl-2,2'-bipyridyl(bpy).

The reaction solvent in this invention are utilized to be dissolving the fluorine containing polymer and as an example N-methylpyrrolidone, dimethylacetamide, dimetylsulfoxide, acetone and its same group which dissolve the co-polymer between polyvinylidene fluoride monomer composition, and vinyl monomer containing fluorine atom and halogen atom such as chlorine atom except fluorine. This reaction temperature are dependent on kinds of Ligand complex used, ordinarily in the range of 10 to 110 °C. One of other polymerization methods is utilized also ultraviolet ray with a photo polymerization trigger and is to be irradiated a radiation ray such as electron beam and its same group. This electron beam polymerization method is being to obtain a crosslinking reaction on co-polymer itself and to being possibly a grafting reaction on a reinforcing material of the monomer, which are specified well. The irradiation volume is controlled preferring in 0.1 to 50Mrad and 1 to 20Mrad as more preferred.

This invention it to make grafting polymerization at range between 2 and 90 mol %, in conditioning the recipe of polymer structure at 98 to 10 mol % as monomer unit and 2 to 90 mol % of the molten salt monomer to meet plastic physical properties aimed as the controlling target. In case of making grafting polymerization of the molten salt monomer on the said polymer, the polymer is of liquid, or solid. These graft polymers are obtained by the methods as described in the above mentioned prior art, WO2010/113971.

In this invention, a molten salt monomer having a polymerizable functional group and having an onium cation and anion containing a fluorine with a fluorine containing polymer of which salt structures are related onium cation having an aliphatic, an alicyclic, an aromatic or a heterocyclic radical, and anion containing fluorine as preferred.

This onium cation means ammonium cation, phosphonium cation, sulfonium cation, oxonium cation, or guanidium cation. As an ammonium cation, quaternary ammonium cation, heterocyclic ammonium cation such as imidazolium cation, pyridinium cation and piperidinium cation. It is preferred the salt structure consisting of ammonium cation at least one kind selected from ammonium cation group as described below and anion at least one kind selected from anion group as described below.

### Ammonium Cation Group:

Pyrrolium cation, pyridinium cation, imidazolium cation, pyrazolium cation, benzimidazolium cation, indolium cation, carbazolium cation, quinolinium cation, pyrrolidinium cation, piperidinium cation, piperazinium cation, alkylammonium cation including substituded with alkyl, hydroxyalkyl or alkoxyalkyl radicals having 1 to 30 carbon atoms (for example 1 to 10 carbon atoms ), These are connected hydrocarbon radicals having 1 to 30 carbon atoms(for example 1 to 10 carbon atoms ), hydroxyalkyl or alkoxyalkyl radicals on N and/or cyclic radical of the ammonium cation.

### Anion Group:

### Phosphonium Cation Group:

Tetraalkylphosphonium cation (for example 1 to 30 carbon atoms), trimethyl ethyl phosphonium cation, triethyl methyl phosphonium cation, tetraminophosphonium cation, trialkylhexadecylphosphonium cation (alkyl having 1 to 30 carbon atoms), triphenyl benzylphosphonium cation, phosphonuim derivatives having three alkyl groups in which each alkyl has 1 to 30 carbon atoms. hexyltrimethylphosphonium cation, asymmetry trimetyl octylphosphonium cation,
dimethyl triaminepropylmethanephosphate cation.

### Sulfonium Cation:

### Trialkylsulfonium cation, diethylmetylsulfonium cation, dimetyl propyl sulfonium cation, asymmetric sulfonium of dimethl hexylsulfonium

Anion group containing fluorine:
BF₄⁻, PF₆⁻, CₙF₂ₙ₊₁CO₂⁻ in n=1 to 4 as an integer whole number, CₙF₂ₙ₊₁SO₃⁻ in n=1 to 4 as an integer whole number, (FSO₂)₂N⁻, (CF₃SO₂)₂N⁻, (C₂F₅SO₂)₂N⁻, C (CF₃SO₂)₃ N⁻, CF₃SO₂-N-COCF₃⁻, R-SO₂-N-SO₂CF₃⁻ wherein R is aliphatic group, ArSO₂ -N-SO₂CF₃⁻ wherein Ar is aromatic group, CF₃COO⁻ and its same group containing halogen atom, and specified anion such as COO⁻ , HCOO⁻ and its same group.

Materials described above in the ammonium cation group and anion group are utilized preferably lithium ion battery including lithium ion capacitor, electrolytic capacitor by reasons of enhancing thermal stability, Durability properties in REDOX and making wider electric potential window, in which a lithium ion battery containing the above material can be used in the range of 0.7 to 5.5 V of higher voltage and a capacitor containing the above material can be used in the range of less than -45°C of extremely low temperature. Also, the above material can be used in paint, adhesive, pressure sensitive adhesive, surface coating agent, shaped articles as additives and further the above material can render the non-conductive layer of anti-static property. Further in case of blending the above material and another resin, good dispersing property and smooth property of the surface of the shaped articles can be improved.

Polymeric radicals of the monomer are indicated C-C unsaturated radicals such as vinyl radical, acryl radical, methacryl radical, acrylamide radical, allyl radicals and its same group, cyclic-ether group as epoxy radical, oxetane radical and its same group, cyclic-sulfide group such as tetrahydrothiophene or isocyanate radical and its same group.
(A) Ammonium cation group having polymeric radicals preferred particularly include trialkylaminoethylmethacrylate ammonium cation, trialkylaminoethylacrylate ammonium cation, trialkylaminopropyla c rylamido ammonium cation, 1-alkyl-3-vinyl imidazolium cation, 4-vinyl-1-alkylpyridinium cation, 1-(4-vinylbenzyl))-3-alkyl imidazolium cation, 1-(vinyloxyethyl)-3-alkylimidazolium cation,
   2-(methacryloyloxy)dialkyl ammonium cation, 1-vinyl imidazolium cation, 1-allylimidazolium cation, N-alkyl-N-allylammonium cation,
   1-vinyl-3-alkylimidazolium cation, 1-glycidyl-3-alkyl-imidazolium cation, N-allyl-N -alkylpyrrolidinium cation or quaternary diallyl dialkyl ammonium cation
   All alkyls therein contain 1 to 10 carbon atoms.
(B) Anion group preferred particularly include bis (trifluoromethylsulfonyl) imide anion, bis(fluorosulfonyl)imide anion,
   2,2,2-trifluoro-N-{(trifluoromethyl)sulfonyl}acetimide anion,
   bis{(pentafluoro)sulfonyl}imide anion, tetra fluoroborate anion, hexafluorophosphate anion, trifluoromethanesulfonylimide anion and its same group. Anions having halogen atom therein are more preferred.

Besides, the molten salt monomer as salt of cation and anion group described above are most preferably included
trialykylaminoethylmethacrylate ammonium bis(fluorosulfonyl)imide,
2-(methacryloyloxy)dialkyl ammonium bis(fluorosulfonyl)imide, wherein alkyl is C₁ to C₁₀ alkyl, N-alkyl-N-allylammonium bis (trifluoromethylsulfonyl) imide wherein alkyl is C₁ to C₁₀ alkyl, 1-vinyl-3-alkylimidazolium bis(trifluoromethylsulfonyl)imide wherein alkyl is C₁ to C₁₀ alkyl,4-vinyl-1-alkyl pyridinium bis(trifluoromethylsulfonyl)imide wherein alkyl is C₁ to C₁₀ alkyl, 4-vinyl-1-alkylpyridiium tetrafluororate wherein alkyl is C₁ to C₁₀ alkyl,
1-(4-vinylbenzil)-3-alkylimidazolium bis{(trifluoromethylsulfonyl) imide wherein alkyl is C₁ to C₁₀ alkyl,
glycidyl-3-alkyl-imidazolium bis{trifluoromethyl}sulfonyl}imide wherein alkyl is C₁ to C₁₀ alkyl, trialkylamino ethylmethacrylate ammonium trifluoromethane sulfonylimide wherein alkyl is C₁ to C₁₀ alkyl, 1-glycidyl-3-alkyl-imidazoliium tetrafluoroborate wherein alkyl is C₁ to C₁₀ alkyl, N-vinylcarbazolium tetrafluoroborate wherein alkyl is C₁ to C₁₀ alkyl and its same group. Those molten salt monomer is utilized one kind or more than two kinds. These molten salt monomer is obtained by the methods as described in the above mentioned prior art of WO2010/113971.

Grafting rate of the molten salt monomer on the co-polymer described above is preferred in the range of 2 to 90 mol.%, more preferred 10 to 80 mol.% and the most preferred 20 to 75 mol.%. In the lower range of grafting rate, for example, 2 to 40 mol.%. preferably 10 to 35 mol.%, more preferably 13 to 30 mol.% the flexibility such as sponge is obtained, and further adhesive strength, elasticity can be improved better. In the higher range of grafting rate, for example, 42 to 90 mol.%. preferably 45 to 90 mol.%, more preferably 45 to 75 mol.%, adhesive strength is improved better due to the increase of viscoelasticity, and further pressure sensitive adhesive strength, anti- cracking property, dispersing property of particle such as pigment, stability on PH, stability on temperature and conductivity can be improved better. The measure of grafting ratio is described in the later Example.

This grafting polymerization of the molten salt monomers is preferred either sole or co-polymerization of the molten salt monomer with other monomers making co-polymerization with the molten salt monomer.

In electrolyte material(X¹), SEI (Solid Electrolyte Interphase) such as vinylidenecarbonate, vinyleneacetate, 2-cyanofuran, 2-thiophenecarbonitrile, acrylonitrile, and solvents can be contained

In this invention by adding fluoropolymer (X²) to electrolyte polymer composition(X¹), Excellent conductive material can be obtained, and so fluoropolymer is mentioned below. As fluoropolymer(X²), fluorine containing polymer used in the graft polymerization as mentioned before, especially polyvinylidene polymer or copolymer is preferably utilized. Further poly chlorofluoroalkylene (herein alkylene means ethylene, propylene, butylene etc), polytetra fluoroethylene, polyvinyl fluoride, tetrafluoroethylene perfluoroalkyl vinylether polymer (herein alkyl means methyl, propyl, butyl and so on), fluoro-polymer obtained by addition of (mono, di, tri)fluoroalkylene (herein alkylene means ethylene, propylene, butylenes and so on) to this fluoropolymer are utilized.

The amount of X¹ is 0.1 to 95 weight % to the total amount of X¹ and X2, preferably 5 to 80 weight %.

Further by the addition of at least one member selected from the group consisting of a molten salt having onium cation and anion containing fluorine, a monomer having onium cation and anion containing fluorine and polymerizable functional group, polymer or copolymer of the abovementioned monomer, the conductivity and conductive durability is improved better. The amount of these compound is 0.1 to 95 weight % to the total weight of the electrolyte polymer composition (X¹) and fluoropolymer (X2), preferably 0.1 to 60 weight %, most preferably 0.1 to 40 weight %.

Herein as a molten salt having onium cation and anion containing fluorine, the above-mentioned ammonium cation group and anion group fluorine is preferable.

Further as a monomer having onium cation and anion containing fluorine and polymerizable functional group, the above mentioned molten salt monomer used in the graft polymerization is raised. And as a polymer or copolymer of the abovementioned monomer, a homo polymer of the above mentioned molten salt monomer is preferably raised.

Polymers using monomers such as 1-alkyl-3-vinyl imidazolium cation (AVI), 4-vinyl-1-alkylpyridinium cation, 1-(4-vinylbenzyl))-3-alkyl imidazolium cation, 1-(vinyloxyethyl)-3-alkylimidazolium cation, 1-vinyl imidazolium cation, quaternary diallyl dialkyl ammonium cation (DAA),
2-(methacryloyloxy)ethyltrimethylammmoniumu (MOETMA) cation,
Dialkyl (aminoalkyl)acrylamide, dialkyl (aminoalkyl)acrylate,
hydroxyalkylmethaacrylatea are raised. Among these homo-polymers and copolymers comprising at least one member of these monomners, homo-polymers are preferable with homo polymer. Further, copolymers of the above mentioned molten salt monomers and other co-monomer are utilized.

In this invention, by the addition of ion transfer sources the conductivity and conductive durability are preferably improved. Herein as an ion transfer source lithium salt is typically utilized wherein it is more preferred lithium salt consisting of lithium cation and anion having fluorine atom containing anion.

As ion transfer sources the following salts such as lithium salt are raised; LiBF₄, LiPF₆, CₙF₂ₙ₊₁CO₂Li wherein n=1 to 4 is an integer whole number, CₙF₂ₙ₊ᵢSO₃Li wherein n=1 to 4 is an integer whole number, (FSO₂)₂NLi, (CF₃SO₂)₂NLi, (CF₃SO₂)₃NLi, (C₂F₅SO₂)₂NLi, (FSO₂)₂Li, (C₂F₅SO₂)₃NLi, (CF₃SO₂-N-COCF₃)Li, Li(R-SO₂-N-SO₂CF₃) wherein R is aliphatic such as alkyl or aromatic group), (C-N)₂CₙF₂ₙ₊₁Li wherein n=1 to 4 is an integer).

Further, as an ion transfer source except lithium salt, stannic tin indium oxide (TIO), carbonate salt is raised

As ion transfer sources, a salt containing nitrogen and preferably the salt consisting of alkylammonium cation such as tetraethylammonium cation or triethylmethylammonium cation and the anion containing fluorine atom.
Et₄-N⁺BF₄⁻, Et₃Me-N⁺BF₄⁻,
Et₄-N⁺PF₆⁻, Et₃Me-N⁺PF₆⁻ and these same group.
Et: Ethyl, Me: Methyl

The amount of the ion transfer source is 0.5 to 2 mol to electrolyte composition (X²), Preferably 0.7 to 1.5 mol.

Alkylene in tetraalkyleneglycol dialkylether (TAGDAE) which is a pair of ion transfer source means alkylene having 1 to 30 carbon atoms such as metylene, ethylene, propylene, and alkyl in TAGDAE means alkyl having 1 to 30 carbon atoms such as methyl, ethyl, propyl. As tetraalkyleneglycol dialkylether, tetraethylene glycol dimethylether (TAGDAE) is the most preferable. The amount of TAGDAE is 0.2 to 2.0 mol to ion transfer source, preferably 0.4 to 1.5 mol.

As anion supporting ion transfer (supporting salt of ion transfer source),
bis{(trifluoromethyl)sulfonyl} imide,
2,2,2-trifluoro-N-{(trifluoromethyl)sulfonyl}acetimide,
bis{(pentafluoro)sulfonyl}imide,
bis{(fluoro)sulfonyl}imide,
tetra fluoroborate,
hexafluorophosphate,
trifluoromethanesulfonylimide and its same group. Anions having halogen atom therein are more preferred.

In this invention, the conductivity and its durability is improved better by addition of the following resin (Y) to the composition of X¹ and X².

As a method of mixing the composition (X1) and (X2) and the resin (Y),
a melt mixed compound method, solvent using method and so on are raised. As the melt mixed compound method, a method of preparing each pellet of these resins, mixing these pellets with the desired ratio and then melting them is raised. The amount of the composition of X¹ and X² is 0.1 to 95 weight % to the total amount of the composition of X¹ and X² and Y, preferably 0.1 to 60 weight % most preferably 0.1 to 40 weight %.

First melt mixing the composition of X¹ and X² to Y with the higher amount of 5 to 98 weight %, preferably 10 to 80 weight % and preparing pellet (master batch) by cutting the melt mixed composition and then mixing this pellet to Y with the amount of 0,1 to 40 weight % of the composition of X¹ and X², this process is preferable. By adding Y, a better conductive material is obtained by rendering ion hopping structure to the non-conductive material (Y) based on cloud structure and/or proton group.

Herein as Y resin, at least one selected from the group consisting of olefin resin, polyacryl resin, polyhalogen resin, vinyl acetate resin, polyether, diene resin, polyester resin, polyamide resin, polysulfone resin, polyphenylene sulfite resin, polyimide resin, silicon resin, polyurethane resin, epoxy resin, phenol resin, amino resin, natural resin. the following resin is raised.

As polyolefin resin, polyethylene, propylene, ethylene-propylene copolymer and polystylene and so on. As polyacryl resin, polymethylmethacrylate, polyacrylonitrile, salt of polyacrylic acid and so on. As polyhalogen resin, polyvinyl chloride, polyvinylidene chloride, polytetrafluoroethylene and so on. As vinyl acetate resin, polyvinyl acetate, polyvinyl alcohol and so on. As polyether, polyethyleneoxide, polypropyleneoxide, polyether ketone and so on. As diene resins, butadiene rubber, chloroprene rubber, isoprene rubber and so on. As polyester, polyethyleneterephthalate, polybutyleneterephthalate polyoxybenzoeate unsaturated polyester, polycarbonate, polycarbonate-polyester polymer alloy resin and so on. As polyamide resin, polycaprolactam, polyhexamethylene adipate, poly aromatic polyamide. As polysulfone resin, polysulfone, polyethersulfone and so on. As silicon resin, silicone rubber, silicone resin, polymerizable silicone resin and so on. As amino resin, urea resin. melamine resin and etc. As natural resin, cellulose resin, natural rubber resin, protein resin, guar gum, tamarind, locust bean gum, xanthan gum, carrageenan and etc.

Among them polyacryl resin, diene resin, silicon resin, polyolefin resin, polyether resin and polyimide resin are preferable. Especially polyacryl resin is the most preferable. As polyacryl resin, alkylacrylate or alkylmethacrylate polymer or copolymer si preferable. As the copolymer, alkylacrylate or alkylmethacrylate copolymer copolymerized with hydroxyethylacrylamide, dialkylacrylamide,
dialkylaminoalkylacrylamide, acryloylmorpholine,
a copolymer of butylacrylate-benzylacrylate-4-hydroxybuthylacrylate, a copolymer of butylacrylate-benzylacrylate-phenoxyethylacrylate-4-hydroxybuthylacrylate-acrylic acid.

In case of adding fluoropolymer to the composition, compatibilizer. Dispersant, anti-oxidizing agent, slipping agent, anti-blocking agent, filler (silica, calcium carbonate, magnesium hydroxide, talk, ceramics and etc), ultraviolet ray absorbing agent, dye, pigment can be preferably added conforming to the purpose.
Herein as compatibilizer or dispersant, low molecular compound (1,2-poributadiene, polyamide · polyphenyleneether copolymer, natural rubber latex, liquid isoprene polymer emulsion), phtarocyanine(hydroxyl containing petro resin (Registered Trademark ┌Rionoble┘ ; Toyo Ink Co,LTD) can be utilized preferably. The amount of filler is preferably 5 to 50 weight % to the total amount of X¹ and/or X² and Y.

As the solvent utilized in preparing the composition, aromatic solvent, ether solvent, 2-propanol, n-methylpyrrolidone, ketone solvent, acetone solvent, chroloalkylene solvent, ester solvent, halogen solvent, dimethyl sulfoxide (DMSO), butyl acetate, ethylglycol acetate can be utilized. Especially by utilizing ultraviolet ray absorbing agent, the effective coating formation can be obtained without any heating treatment and the strength of the coating layer is improved better.

The conductive material oh this invention is useful in conductive pressure sensitive adhesive, conductive adhesives, conductive paint, conductive resin powder for shaped article, conductive pellet for injection molding, conductive thread, conductive sheet, conductive panel, conductive tubular shaped article, especially very useful in conductive pressure sensitive adhesive.

Further, the present conductive material is useful in coating agent to the surface or both surfaces of a separator such as polyethylene film, polypropylene film, polyimide film and the like.
As a method of coating the surface or both surfaces, immersion method, calendar coating method, die coating method, spray coating method is raised. By such a method and then by natural drying or heat drying the conductive separator can be obtained.

The present conductive material is useful as multilayered structure, and so the multilayered structure is mentioned below.

The multilayered structure is obtained by a method of coating the surface or both surfaces of non-conductive resin (W) layer which is an insulator having no free ion, or by laminating W resin layer to the upper, or by a method of coating the one surface of W resin layer and then extruding W resin to the upper, or by co-extruding two or three or more layer of W resin . In case of laminating the W resin to the both surfaces, the W resin is the same or different. W resin layer is preferably film.

Th above mentioned resin Y is raised as W resin, and polyolefin resin (polyethylene, polypropylene, ethylene-propylene copolymer and polystyrene), vinyl acetate resin (polyvinyl acetate, polyvinyl alcohol), polyester (polyethyleneterephthalate, polybutyleneterephthalate, polyoxybenzoate unsaturated polyester, polycarbonate) are preferable.

The thickness of the layer on the present electrolyte composition or the thickness of the intermediate layer in case of using the present electrolyte composition as intermediate layer of the multilayered structure is preferably 1 to 100 micron (µ), more preferably 5 to 50 µ. The thickness of one layer of W resin is preferably 1 to 200 µ, more preferably 5 to 50 µ. The total thickness of the three layers is preferably 5 to 300 µ, more preferably 15 to 150 µ.

As the layer structure of the multilayered structure, composition layer/W layer/composition layer, W layer/composition layer, W layer/composition layer/W layer, W layer/composition layer/W layer/composition layer/W layer, W layer/composition layer/W layer/ composition layer/W layer/ composition layer/W layer are raised, Among them W layer/composition layer, W layer/composition layer/W layer, composition layer/W layer/composition layer are preferable. The addition of the layer such as other resin, metal, glass, wood material, paper, fiber, fabrics, non-woven paper to the above mentioned multilayered is free.

Thus, obtained multilayered structure has an extreme excellent conductivity and its durability, and excellent strength as mentioned in the following examples.

That is, without forming conductive cluster to the structure, ion such as anion or cation in the composition can be transferred to the surface of the W resin layer, and so conductivity and its durability is improved better.
The lamella structure is formed or not formed, but the formation of the lamella structure is preferable because the lamella structure can promote the effective transfer of electron.

The following examples are provided to illustrate this invention.

### Example

### [grafted polymer 1]

-(CH₂-CF₂)n-(CF₂-CFCl)m-{n=96 mol.%, m=4 mol. %; Product No.#7500 produced by Kureha Chemical Co.; intrinsic viscosity [η]=2.55 (value measured by means of Ostwald viscometer, using DMAC solvent at 25□) ; molecular weight supposed from [η]=2.55 is 1.2 million} was used as a copolymer of
vinylidene fluoride (PDdF)-trifluoro chloro ethylene(CTFE).

A molten salt monomer was graft-polymerized with this copolymer under the following conditions.

PVdF-CTFE copolymer #7500 in 6 g and N-methyl pyrrolidone (NMP) in 80 g was added to a three necks flask of 1L size, and heated in oil bath at 80°C and dissolved in stirring. After replacing the atmosphere with argon gas sufficiently, molten salt monomers trimethyl aminoethylmethacrylate bis(trifluoromethanesulfonyl)imide (TMAEMA · TFSI} and 0.46 g of N, N',N'-tetrakis(2-pyridylmethyl)ethylenediamine (TPEN) dissolved in NMP of 20 g and 0.08 g of CuCl were added to the solution. Further, by replacing the atmosphere with argon, the mixed solution was reacted at 90°C for 23 hours.

After the reaction, the solution was cooled down to 40°C, and diluted with acetone. This diluted solution was added to 50 % aqueous solution of methanol in stirring and precipitated. Thus, the obtained product was washed off with methanol solution and dried, and the crude polymer was obtained.

The crude polymer was crashed and added to mixed solvent of acetone in 40 % and methanol in 60 % and made stirred. Non-grafting polymerized polymer of molten salt monomer and non-reacted molten salt monomer were dissolved in the mixed solvent, and grafted polymer was swollen and precipitated, and separated with centrifuge. By repeating this operation, grafted polymer without homo polymer was obtained. Further, the grafted polymer was dried in vacuum at 30°C, and then the yield of grafted polymer was measured and the grafted ratio in mol % was measured 71.7 mol % by infrared spectrum.

### Remark 1) Grafted Ratio in mol. %

Changing the ratio in mol. % of PVdF-CTFE copolymer and grafted polymer, calibration curve was prepared by measuring infrared spectrum.
The grafted ratio in mol. % of TMAEMA · TFSI with the used test pieces was measured by using this calibration curve.

### [grafted polymers 2 to 6]

Except that -(CH₂-CF₂)n-(CF₂-CFCl)m- having 7 mol.% of CTFE {n=93 mol.%, m=7 mol.%; Product No.FD3145 produced by Kureha Chemical Co.; intrinsic viscosity [η]=2.42 value measured by means of Ostwald viscometer, using dimethylacetamide (DMAC) solvent at 25°C ; molecular weight supposed from the above [η] is 1.11 million} was used instead of the copolymer having 4 mol.% of CTFE) in the process of grafted polymer 1 and that the other molten polymerizable monomers were used instead of TMAEMA · TFSI and that CuBr was used instead of CuCl as a catalyst of grafting polymerization, grafting polymerization was carried out in the same manner as the above mentioned process of grafted polymer. The result is shown in Table 1.

**[Table 1]**

| Grafted polymer | Grafted Ratio mol. % |
|---|---|
| Grafted polymer 2 | 60.8 |
| Grafted polymer3 | 45.6 |
| Grafted polymer 4 | 23.3 |
| Grafted polymer 5 | 17.8 |
| Grafted polymer 6 | 7.1 |

### [grafted polymer 2]

Except that 2-(methacryloyloxy)ethyltrimethyl ammonium bis (fluorosulfonyl)imide (MOETMA · FSI) was used instead of TMAEMA · TFSI, grafting polymerization was carried out in the same manner of the above mentioned process of grafted polymer 1. Further after vacuum drying at 30 °C , the yield was measured, and the grafted ratio in mol.% was measured 60.8 mol.% by infrared spectrum.

### [grafted polymer 3]

Except that 2-(methacryloyloxy)ethyltrimethyl ammonium bis (fluorosulfonyl)imide (MOETMA · FSI) was used instead of TMAEMA · TFSI, grafting polymerization was carried out in the same manner of the above mentioned process of grafted polymer 1. Further, after vacuum drying at 30°C, the yield was measured, and the grafted ratio in mol.% was measured 45.6 mol.% by infrared spectrum.

### [grafted polymer 4]

Except that 2-(methacryloyloxy)ethyltrimethyl ammonium bis (fluorosulfonyl)imide (MOETMA · FSI) was used instead of TMAEMA · TFSI, grafting polymerization was carried out in the same manner of the above mentioned process of grafted polymer 1. Further after vacuum drying at 30°C, the yield was measured, and the grafted ratio in mol.% was measured 23.3 mol.% by infrared spectrum.

### [grafted polymer 5]

Except that 2-(methacryloyloxy)ethyltrimethyl ammonium bis (fluorosulfonyl)imide (MOETMA · FSI) was used instead of TMAEMA · TFSI, grafting polymerization was carried out in the same manner of the above mentioned process of grafted polymer 1. Further, after vacuum drying at 30°C, the yield was measured, and the grafted ratio in mol.% was measured 17.8 mol.% by infrared spectrum.

### [grafted polymer 6]

Except that 2-(methacryloyloxy)ethyltrimethyl ammonium bis (fluorosulfonyl)imide (MOETMA · FSI) was used instead of TMAEMA · TFSI, grafting polymerization was carried out in the same manner of the above mentioned process of grafted polymer 1. Further. after vacuum drying at 30°C, the yield was measured, and the grafted ratio in mol.% was measured 7.1 mol.% by infrared spectrum.

### [homopolymer 1 (Z-1)]

Desired homo-polymer of 2-(methacryloyloxy)ethyltrimethyl ammonium bis (fluorosulfonyl)imide (MOETMA · FSI) was obtained by living polymerization solving the monomer 50 g in acetone in the presence of azo catalyst 5 g at 60 °C.

The obtained homo-polymer was solved in ethanol and then refined. The desired homo-polymer was obtained by drying it.

### [homo-polymer 1 (Z-2)]

Except that dimethylaminopropylacrylamide bis(fluorosulfonyl)imide(DMAPAA · FSI) was used instead of MOETMA · FSI, living polymerization was carried out in the same manner of the above mentioned process of homo-polymer (Z-1).

### Example 1 (pressure sensitive adhesive)

10 weight % of Dispersant (phthalocyanine ; ┌Lionoble┘ petro resin having hydroxyl group; prepared by Toyo Ink CO., LTD) was added to the total amount of grafted polymer 1 {30 weight % of electrolyte composition (X¹) } and 70 weight % of poly vinylidene fluoride (X²). As a solvent, N-metyl pyrrolidone was used, and desired conductive pressure sensitive adhesive containing 10 weight % of solid content was obtained.

### Example 2 (pressure sensitive adhesive)

10 weight % of Dispersant (phthalocyanine ; ┌Lionoble┘ petro resin having hydroxyl group; prepared by Toyo Ink CO., LTD) was added to the total amount of grafted polymer 2 {10 weight % of electrolyte composition (X¹) }, 20 weight % of poly vinylidene fluoride (X²) and 70 weight % of acryl resin (Product name ┌BR-106┘ prepared by Mitsubishi Rayon Co., LTD). As a solvent, N-metyl pyrrolidone was used, and desired conductive pressure sensitive adhesive containing 10 weight % of solid content was obtained.

### Example 3 (pressure sensitive adhesive)

10 weight % of Dispersant (phthalocyanine ; ┌Lionoble┘ petro resin having hydroxyl group; prepared by Toyo Ink CO., LTD) was added to the total amount of grafted polymer 3 {20 weight % of electrolyte composition (X¹)}, 70 weight % of poly vinylidene fluoride (X²) and 10 weight % of a molten salt of {1-ethyl-3 methylimidazolium bis(trifluoromethanesulfonyl)imide}(EMI-TFSI) having no polymerizable functional group. And 1.0 mol. of lithium bis(fluorosulfonyl)imide as an ion transfer source to X¹ was added. Further, as a sovent, N-metyl pyrrolidone was used, and desired conductive pressure sensitive adhesive containing 10 weight % of solid content was obtained.

### Example 4 (conductive resin pellet)

10 weight % of Dispersant (phthalocyanine ; ┌Lionoble┘ petro resin having hydroxyl group; prepared by Toyo Ink CO., LTD) was added to the total amount of grafted polymer 4 {30 weight % of electrolyte composition (X¹) }, 65 weight % of poly vinylidene fluoride (X²) and 5 weight % of a molten salt {ethylene vinyl imidazolium bis(fluoroslulfonyl)imide having a polymerizable functional group}. And 1.0 mol. of the ion transfer source to the total amount of X¹ and a molten salt having a polymerizable function group was added. These were melt mixed and then the mixture was melt mixed with polyester (Y) in which the amount of X¹ and X² is 5 weight % to the total of Y. The mixture was excluded and the desired pellet was obtained.

### Example 5 (conductive paint)

55 weight % of 2-methyl-1,3-propanoldiol and 20 weight % of leveling agent (BYK-331) was added to 25 weight % of grafted polymer 5 {15 weight % of electrolyte composition (X¹)}, 70 weight % of poly vinylidene fluoride (X²) and 15 weight % of homo-polymer (Z-1) of a molten salt monomer. Further 0.5 weight % of dibutyl tin dilaurate catalyst was added to the total amount of X¹ and Z-1. Further, as a solvent, a mixed solvent of xylene-butyl acetate- ethylene glycol acetate in which the ratio is 6:3:1 was used. And desired paint containing 30 weight % of the solid content was obtained.

### Example 6 (conductive sheet)

2 weight % of heat polymerization catalyst (azo-catalyst ┌ V - 6 0 A I B N ┘ prepared by Wakojunyaku Co., LTD) was mixed to the total amount of 20 weight % of grafted polymer 6 (X¹), 70 weight % of poly vinylidene fluoride (X²) and 10 weight % of homo-polymer of (Z-1) of a molten salt monomer. Using benzyl alcohol as a solvent, paint coating in 10
weight % of the solid content was prepared. This solution was coated by casting to polyester film and then by drying at 65 °C, and the desired conductive sheet was obtained.

### Example 7 (conductive thread)

30 weight % of the mixture of 20 weight % of grafted polymer 6 (X¹), 65 weight % of polyvinylidenefluoride (tetrafluoroethylene perfluoromethylvinylether) (X²), 15 weight % of homo-polymer of (Z-1) was mixed to 70 weight % of polyether resin (one liquid polyurethane resin ┌ U R I C H - 5 7 ┘ prepared by Nippon Polyurethane Co., Ltd.). Using ethanol as a solvent, coating solution of 10 weight % of the solid content was prepared. Polyester fiber was immersed in this solution and drying at 90°C and then the desired conductive thread was obtained. The material of the thread is not limited to polyether or natural material.

### Example 8 (conductive plate)

1.0 mol. of ion transfer source to X¹ and lithium tetra fluorosulfonyl imide was mixed to epoxy resin (Y). This mixture was mixed to 10 weight % of grafted polymer 6 (X¹), 80 weight % of poly vinylidene fluoride (X²) and 10 weight % of homo-polymer of (Z-1) of a molten salt monomer, and then the solution was obtained in the same manner as Example 6. This solution was casted on the surface of acryl resin plate in the thickness of 50 micron and then the casted acryl resin plate was dried at 65 °C, and the desired conductive plate was obtained.

### Example 9 (conductive tube)

30 weight % of 1.0 mol of ion transfer source to X¹ and lithium tetra fluorosulfonyl imide was mixed to poring 70 weight % of pouring urethane resin (┌Pandex┘ P-910 prepared by DIC Corporation). This mixture was mixed to 30 weight % of grafted polymer 6 (X¹), 60 weight % of poly vinylidene fluoride (X²) and 10 weight % of homo-polymer of (Z-1) of a molten salt monomer, and then the solution was obtained in the same manner as Example 6. This solution for shaped article was put into a cavity and introducing air during heating and then the desired conductive tube was obtained. This process can be applied to blow molding, too.

### Example 10

Except that 1.0 mol. of ion transfer source{(FSO₂)₂NLi} was added to X¹, conductive pressure sensitive adhesive was obtained in the same manner as Example 1.

### Example 11

Except that 1.0 mol. of ion transfer source{(FSO₂)₂NLi} was added to X¹ and that 0.5 mol of tetraethyleneglycoldimethylether (TEGDME) was added to the ion transfer source, conductive pressure sensitive adhesive was obtained in the same manner as Example 1.

### Comparative example 1

Except that a solution of toluene-methylethylketone 1 and
1- ethyl-3-methylimidazolium bis-{(trifluoromethyl)sulfonyl}imide (EMI · TFSI) was used instead of grafted polymer. Conductive pressure sensitive adhesive was obtained in the same manner as Example 1.

### Comparative example 2

Except that fluoropolymer (X²) was not used, conductive pressure sensitive adhesive was obtained in the same manner as Example 1.

### Example 12 (multilayered structure-1)

Pressure sensitive adhesive obtained in Example 1 was coated to one side surface of polyester film (50 microns), and polyester film (50 microns) was laminated on the above coated pressure sensitive adhesive layer of the polyester film and then the multilayered structure was obtained by heat-laminating at 100 °C, 10Kg/cm² for 2 minutes. The thickness of the intermediate layer of pressure sensitive adhesive was 10 microns, and the total thickness of the multilayered structure was 110 microns

### Example 13 (multilayered structure-2)

Pressure sensitive adhesive obtained in Example 2 was coated to one side surface of polyester film (50 microns) and polypropylene resin was melt-extruded at 230 degree through T-die on the above coated pressure sensitive adhesive layer of the polyester film stuck to a chill roll part at 50 °C. Then the multilayered structure was pushed by nip roll provided on the chill roll and cooled down and solidified The thickness of the polypropylene layer was 72 microns, the intermediate layer of pressure sensitive adhesive was 15 microns, and the total thickness of the multilayered structure was 137 microns

### Example 14 (multilayered structure-3)

Pressure sensitive adhesive obtained in Example 3 was coated to one side surface of polyester film (50 microns), and polyester film (50 microns) was laminated on the above coated pressure sensitive adhesive layer of the polyester film and then the multilayered structure was obtained by heat-laminating at 100 °C, 10Kg/cm² for 2 minutes. The thickness of the intermediate layer of pressure sensitive adhesive was 10 microns, and the total thickness of the multilayered structure was 110 microns

### Example 15 (multilayered structure-4)

Pressure sensitive adhesive obtained in Example 4 was coated to one side surface of polyester film (50 microns), and polyester film (50 microns) was laminated on the above coated pressure sensitive adhesive layer of the polyester film and then the multilayered structure was obtained by heat-laminating at 100 °C, 10Kg/cm² for 2 minutes. The thickness of the intermediate layer of pressure sensitive adhesive was 10 microns, and the total thickness of the multilayered structure was 110 microns

### Example 16 (multilayered structure-5)

Pressure sensitive adhesive obtained in Example 3 was coated to one side surface of polyimide film (50 microns), and polyester film (50 microns) was laminated on the above coated pressure sensitive adhesive layer of the polyimide film and then the multilayered structure was obtained by heat-laminating at 100 °C, 10Kg/cm² for 2 minutes. The thickness of the intermediate layer of pressure sensitive adhesive was 10 microns, and the total thickness of the multilayered structure was 110 microns

### Comparative Example 3

Pressure sensitive adhesive obtained in Comparative Example 1 was coated to one side surface of polyester film (50 microns), and polyester film (50 microns) was laminated on the above pressure sensitive adhesive layer of the polyester film and then the multilayered structure was obtained by heat-laminating at 100 °C, 10Kg/cm² for 2 minutes. The thickness of the intermediate layer of pressure sensitive adhesive was 10 microns, and the total thickness of the multilayered structure was 110 microns

### Comparative Example 4

Pressure sensitive adhesive obtained in Comparative Example 2 was coated to one side surface of polyester film (50 microns), and polyester film (50 microns) was laminated on the above pressure sensitive adhesive layer of the polyester film and then the multilayered structure was obtained by heat-laminating at 100 °C, 10Kg/cm² for 2 minutes. The thickness of the intermediate layer of pressure sensitive adhesive was 10 microns, and the total thickness of the multilayered structure was 110 microns.

**[Table 2]**

| | Conductivity (S/cm) | Conductive durability |
|---|---|---|
| Example 1 (Pressure sensitive adhesive) | 3.8 × 10⁻⁴ | No change |
| Example 2 (Pressure sensitive adhesive) | 5.9 × 10⁻⁴ | No change |
| Example 3 (Pressure sensitive adhesive) | 7.3 × 10⁻⁴ | No change |
| Example 4 (Pressure sensitive adhesive) | 8.4 × 10⁻⁴ | No change |
| Example 5 (paint) | 7.1 × 10⁻⁴ | No change |
| Example 6 (sheet) | 3.1 × 10⁻⁵ | No change |
| Example 7 (thread) | 6.4 × 10⁻⁶ | No change |
| Example 8 (plate) | 3.1 × 10⁻⁸ | No change |
| Example 9 (tube) | 5.9 × 10⁻⁸ | No change |
| Example 10 | 7.9 × 10⁻³ | No change |
| Example 11 | 2.8 × 10⁻³ | No change |
| Comparative Example 1 (Pressure sensitive adhesive) | 7.3 × 10⁻⁷ | Change 4.1 × 10⁻⁹ |
| Comparative Example 2 (Pressure sensitive adhesive) | 3.8 × 10⁻⁶ | Change 6.9 × 10⁻⁶ |

**[Table 3]**

| | Strength MPas (Remark 1) | Conductivity (S/cm) (Remark 2) | Conductive Durability (Remark 3) |
|---|---|---|---|
| Example 12 | 16(High viscosity) | 3.6 × 10⁻² | No change |
| Example 13 | 15(viscosity) | 2.1 × 10⁻³ | No change |
| Example 14 | 13(Low viscosity) | 4.9 × 10⁻³ | No change |
| Example 15 | 14 | 6.1 × 10⁻³ | No change |
| Example 16 | 16 | 1.8 × 10⁻⁴ | No change |
| Comparative Example 3 | 9 | 6.2 × 10⁻⁵ | Degradation 3.9 × 10⁻⁹ |
| Comparative Example 3 | 8 | 8.1 × 10⁻⁶ | 6.9 × 10⁻⁸ |

- Remark 1): Strength: MPas (Mega Pascal) was measured when the laminate of polyester films was torn off at the speed of 5/cm until 180 degrees.
- Remark 2): Conductivity: S/cm (Siemens/cm) :
Test pieces are put between platinum electrodes (electrode area: 0.95cm²), and the resistance of membrane is measured according to a method of alternating current impedance in 0.1 V, Frequency in 1Hz to 10MHz at 20°C and 65% RH, and on the basis of this resistance of membrane, the electrical conductive property is calculated.
- Remark 3): Conductive durability:
Conductivity was measured after keeping the pieces under 40 °C and 50 RH during 6 months.

### Industrial applicability of this invention:

As the conductive material of this invention has an excellent strength, conductivity and conductive durability, it is useful as conductive pressure sensitive adhesive, conductive adhesive, conductive paint, conductive thread, conductive sheet, conductive plate, conductive tube etc. Further, it is useful as conductive separator (filter) of lithium ion battery, capacitor and fuel cell. Further, the multilayered structure using the present conductive material is useful in the field requesting conductivity such as optical laminate such as polarizing plate, magnetic tape laminate. Further, heretofore pressure sensitive adhesive and adhesive containing LTO, metal and carbon as conductive body has some problems in color phase and transparency, but by using the present conductive material the color phase and transparency is improved better, and so it is possible to apply the present conductive material in the field requesting the same transparency as acryl resin.

## Claims

1. A conductive material comprising a polymer electrolyte composition (X¹) obtained by graft polymerizing 2 to 90 mole % of a molten salt monomer having a polymerizable functional group and having an onium cation and anion containing a fluorine with a fluorine containing polymer and a fluoropolymer (X²) wherein X¹ contains 0.1 to 95 wt % to X²

2. A conductive material in accordance with claim 1, wherin further at least one member selected from the group consisting of a molten salt having an onium cation and anion containing a fluorine, a molten salt monomer having a polymerizable functional group and having an onium cation and anion containing a fluorine and polymer or copolymer of the above mentioned molten salt monomer having is added 0.1 to 95 wt % to X¹ and X².

3. A conductive material in accordance with claim 1, wherin further at least one member selected from the group consisting of Y as stated later is added 0.1 to 95 wt % to X¹ and X²;
Y:polyolefin resin, polyacryl resin, polyhalogen resin, vinyl acetate resin, polyether, diene resin, polyester resin, polyamide resin, polysulfone resin, polyphenylene sulfite resin, polyimide resin, silicon resin, polyurethane resin, epoxy resin, phenol resin, amino resin, natural resin.

4. A conductive material in accordance with claim 1, wherein a fluorine containing polymer is a polyvinylidene fluoride having a unit of a vinylidene fluoride and a unit of -(CR¹R²-CFX)-;
X means halogen atom except fluorine atom,
R¹ and R² means hydrogen atom or fluorine atom, each is same or different,

5. A conductive material in accordance with claim 1, wherein a molten salt monomer is graft-polymerized with a fluorine containing polymer under an atom transfer radical polymerization.

6. A conductive material in accordance with claim 1, wherein a molten salt monomer is a salt having at least one ammonium quaternary cation selected from the group consisting of
(B) trialkylaminoethylmethacrylate ammonium cation,
trialkylaminoethylacrylate ammonium cation,
trialkylaminopropyla c rylamido ammonium cation,
2-(methacryloyloxy)dialkyl ammonium cation
1-alkyl-3-vinylimidazolium cation,
4-vinyl-1-alkylpyridinium cation,
1-(4-vinylbenzyl)-3-alkyl imidazolium cation,
1-(vinyloxyethyl)-3-alkylimidazolium cation,
1-vinyl imidazolium cation, 1-allylimidazolium cation,
N-alkyl-N-allylammonium cation,
1-vinyl-3-alkylimidazolium cation,
1-glycidyl-3-alkyl-imidazolium cation,
N-allyl-N-alkylpyrrolidinium cation, onium cation,
and quaternary diallyl dialkyl ammonium cation and
at least one anion selected from the group consisting of
(B) bis {(trifluoromethane)sulfonylimide}anion,
2,2,2-trifluoro-N-{(trifluoromethane)sulfonyl{acetimide anion,
bis(pentafluoro)sulfonyl}imide anion,
bis(fluorosulfonyl}imide anion, tetra fluoroborate anion, hexafluorophosphate anion,
trifluoromethanesulfonylimide anion,
perfluoroalkanesulphonete anion,
bis(perfluoroalkanesulfonyl) imide anion,
tris(perfluoroalkanesulfonyl) methide acid anion

7. A conductive material in accordance with claim 1, wherein the conductive material contains a lithium salt consisting of LiBF₄, LiPF₆, CₙF₂ₙ₊₁CO₂Li wherein n=1 to 4 is an integer whole number, CₙF₂ₙ₊ᵢSO₃Li wherein n=1 to 4 is an integer whole number, (FSO₂)₂NLi, (CF₃SO₂)₂NLi, (C₂F₅SO₂)₂NLi, (CF₃SO₂)₃NLi, Li(CF₃SO₂-N-COCF₃), Li(R-SO₂-N-SO₂CF₃) wherein R is aliphatic group or aromatic group, (CN-N)₂CₙF₂ₙ₊₁Li wherein n=1 to 4 is an integer whole number.

8. A conductive material in accordance with claim 7, wherein the conductive material contains a tetra alkylene glycol dialkyl ether.

9. A conductive pressure sensitive adhesive, conductive adhesive, conductive paint, conductive powder for shaped article, conductive resin pellet for injection molding, conductive thread, conductive sheet, conductive panel, conductive tube or pipe made of the conductive material as defined in claim 1.

10. A multilayered conductive structure comprising a layer of the non-conductive polymer (W) as mentioned below and a surface layer or an intermediate layer of sticky material, adhesive or paint made of the conductive material as defined in claim 1; W: polyolefin resin, polyacryl resin, polyhalogen resin, vinyl acetate resin, polyether, diene resin, polyester resin, polyamide resin, polysulfone resin, polyphenylene sulfite resin, polyimide resin, silicon resin including a release film, polyurethane resin, epoxy resin, phenol resin, amino resin, natural resin.
